(19)

Europäisches
Patentamt
European
Patent Office
Office européen
des brevets

(11) **EP 3 626 883 A1**

(12) **EUROPEAN PATENT APPLICATION**
published in accordance with Art. 153(4) EPC

(43) Date of publication:
**25.03.2020 Bulletin 2020/13**

(21) Application number: **18824514.6**

(22) Date of filing: **10.05.2018**

(51) Int Cl.:
*D21C 5/02* (2006.01)          *B09B 3/00* (2006.01)
*B09B 5/00* (2006.01)          *C08J 11/10* (2006.01)
*D21B 1/32* (2006.01)          *D21H 11/14* (2006.01)

(86) International application number:
**PCT/JP2018/018180**

(87) International publication number:
**WO 2019/003657 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2017 JP 2017126792**

(71) Applicant: **Unicharm Corporation**
**Shikokuchuo-shi, Ehime 799-0111 (JP)**

(72) Inventors:
• **KONISHI, Takayoshi**
  **Kanonji-shi**
  **Kagawa 769-1602 (JP)**
• **HIRAOKA, Toshio**
  **Kanonji-shi**
  **Kagawa 769-1602 (JP)**
• **KURITA, Noritomo**
  **Kanonji-shi**
  **Kagawa 769-1602 (JP)**

(74) Representative: **Dolleymores**
**9 Rickmansworth Road**
**Watford, Hertfordshire WD18 0JU (GB)**

(54) **METHOD FOR PRODUCING RECYCLED FIBERS, AND RECYCLED FIBERS**

(57)     In this method of producing recycled fibers by removing superabsorbent polymers from fibers containing superabsorbent polymers, recycled fibers are efficiently produced while the superabsorbent polymers are suitably removed from the fibers. This method produces recycled fibers from a mixture of fibers and superabsorbent polymers. This method involves a continuous treatment step (S36) in which, in a treatment tank (31) having a treatment solution that can dissolve superabsorbent polymers, superabsorbent polymers are dissolved while a mixed solution (51) that contains water and fibers containing superabsorbent polymers is continuously supplied at a first flow rate, and the treatment solution (52) containing the removed fibers is continuously discharged to outside of the treatment tank at a second flow rate.

FIG. 2

EP 3 626 883 A1

## Description

FIELD

The present invention relates to a method of producing recycled fibers from a mixture of fibers and superabsorbent polymers, and to recycled fibers.

BACKGROUND

Techniques for recycling absorbent articles such as used disposable diapers are known. Patent Literature 1, for example, discloses a method of producing recycled pulp from used sanitary products. The method includes a step of applying physical force to used sanitary products in an acidic aqueous solution or the like to disintegrate the used sanitary products into pulp fibers and other materials, a step of separating the pulp fibers from the mixture of the pulp fibers and other materials, and a step of treating the separated pulp fibers with an ozone-containing aqueous solution. The reason for treating the pulp fibers with the ozone-containing aqueous solution is in order to decompose, low-molecularize and solubilize the superabsorbent polymers remaining in a considerable amount in the separated pulp fibers, and thus remove it from the pulp fibers. The method for treating the pulp fibers with the ozone-containing aqueous solution may be one in which the ozone-containing aqueous solution is placed in a treatment tank and the separated pulp fibers are placed in the ozone-containing aqueous solution. During treatment, it is preferred to appropriately agitate the ozone-containing aqueous solution to create a water stream. Alternatively, ozone gas may be blown into the aqueous solution in the tank, and an increase in ozone gas bubbles thus used to generate a water stream in the ozone-containing aqueous solution.

[CITATION LIST]

[PATENT LITERATURE]

[Patent Literature 1] Japanese Unexamined Patent Publication No. 2016-881

SUMMARY

[TECHNICAL PROBLEM]

In Patent Literature 1, in order to remove the superabsorbent polymers that remains in the pulp fibers as much as possible, it is essential to generate a water stream in the ozone-containing aqueous solution to maximize the area of pulp fibers contacting with the ozone. If the purpose is to increase the efficiency of treatment of the pulp fibers, on the other hand, then it is essential to load the pulp fibers as much as possible into the ozone-containing aqueous solution. However, loading large amounts of pulp fibers into the ozone-containing aqueous solution can potentially lower the speed of the water stream produced by agitation of ozone gas in the ozone-containing aqueous solution, often making it difficult for a water stream to be produced. When this occurs, it becomes difficult to increase the area of the pulp fibers in contact with the ozone, and therefore treatment of the pulp fibers becomes irregular, or in other words, removal of the superabsorbent polymers is insufficient. Even if the ozone concentration in the ozone-containing aqueous solution is increased, removal of the superabsorbent polymers may still be insufficient if the speed of the water stream is reduced or if it is difficult to generate a water stream. As a result, the purity of the regenerated pulp fibers, i.e. the recycled pulp, is reduced, and reutilization becomes difficult since the potential purposes of the reutilization become limited. If the treatment time is then lengthened to sufficiently remove the superabsorbent polymers, the pulp fiber treatment efficiency is lowered and it becomes difficult to efficiently produce recycled pulp. This can likewise occur, not only when recycled pulp is produced from pulp fibers containing superabsorbent polymers, but also when producing recycled fibers from other fibers containing superabsorbent polymers.

It is an object of the present invention to provide a method of producing recycled fibers by removing superabsorbent polymers from fibers containing superabsorbent polymers, wherein the superabsorbent polymers are suitably removed from the fibers while allowing efficient production of recycled fibers.

[SOLUTION TO PROBLEM]

The method of the present invention for producing recycled fibers from a mixture of fibers and superabsorbent polymers, is as follows. (1) A method of producing recycled fibers from a mixture of fibers and superabsorbent polymers, the method comprising: a continuous treatment step of continuously supplying a liquid mixture including fibers containing the superabsorbent polymers and water is at a first flow rate into a treatment tank holding a treatment solution capable of dissolving the superabsorbent polymers, while continuously discharging the treatment solution containing the fibers from which the superabsorbent polymers has been dissolved and removed at a second flow rate out of the treatment tank.

In this method, the liquid mixture containing the superabsorbent polymers and fibers is continuously supplied at a first flow rate (volume or mass/time) into the treatment tank holding the treatment solution capable of dissolving the superabsorbent polymers, while the treatment solution that includes the fibers from which the superabsorbent polymers has been removed and low-molecular-weight organic materials generated by oxidative decomposition of the superabsorbent polymers, is continuously discharged at a second flow rate (volume or mass/time) out of the treatment tank. Thus, it is possible to forcibly generate a continuous and stable fluid flow from the supply port of the treatment tank where the liquid mixture is supplied, toward the discharge port where the liquid mixture or treatment solution is discharged. The fluid flow, i.e. the water stream, can increase the area of fibers contacting with the treatment solution even when the throughput of fibers is large, and allows the fibers to be contacted with the treatment solution in an evenly distributed manner. It is therefore possible to minimize irregularity in the fiber treatment even with a large throughput of fibers, and to properly dissolve the superabsorbent polymers in the treatment solution. This can increase the purity of the regenerated fibers, i.e. the recycled fibers, allowing production of easily reutilizable recycled fibers. The superabsorbent polymers can thus be suitably removed from the fibers, while efficiently producing recycled fibers.

The method may also be (2) the method according to (1) above, wherein the continuous treatment step includes a step of continuously supplying the liquid mixture through a top of the treatment tank while continuously discharging the treatment solution through a bottom of the treatment tank.

Since the fibers containing the superabsorbent polymers in the liquid mixture generally have a higher specific gravity than the treatment solution, their gravity supersedes their buoyancy in the treatment solution, resulting in natural settling. Consequently, if the liquid mixture, i.e. the fibers, are supplied into the treatment tank from the bottom toward the top, they may potentially return to the bottom again. In addition, when the flow of fluid generated in the treatment tank is from bottom to top, portions may be generated that lose to gravity inside the fluid and settle in the corners of the base of the treatment tank. In such cases, the efficiency of treatment for removal of the superabsorbent polymers from the fibers is reduced. In this method, therefore, the liquid mixture is supplied through the top of the treatment tank and the treatment solution is discharged from the bottom of the treatment tank, so that the fibers containing the superabsorbent polymers move from top to bottom in the treatment solution. It is thus possible to generate a continuous and stable fluid flow from top to bottom of the treatment tank. As a result, the fibers containing the superabsorbent polymers can move more smoothly from top to bottom of the treatment tank by gravity and the fluid flow, while undergoing treatment by the treatment solution, without settling in the corners or on the edges inside the treatment tank. Therefore, the fibers that have completed treatment by the treatment solution can be discharged out directly from the bottom of the treatment tank. In other words, the fibers containing the superabsorbent polymers can be efficiently treated. This allows recycled fibers to be efficiently produced.

The method may also be (3) the method according to (2) above, wherein the treatment solution capable of dissolving the superabsorbent polymers is an aqueous solution containing a gaseous substance that decomposes the superabsorbent polymers in a soluble manner, and the continuous treatment step further includes a delivery step of continuously delivering bubbles of the gaseous substance from a bottom toward a top of the treatment solution.

In this method, a countercurrent is produced in which the gaseous substance moves from the bottom to the top of the treatment solution, and the fibers containing the superabsorbent polymers move from the top to the bottom. The likelihood of contact between the superabsorbent polymers contained in the fibers and the gaseous substance can thereby be increased. In addition, the fibers containing the superabsorbent polymers can contact with a higher concentration of gaseous substance when they settle deeper. Therefore, the superabsorbent polymers that could not be dissolved in the treatment solution with only the gaseous substance contacting with the treatment solution up to a shallow level, can be contacted with a high concentration of gaseous substance up to a deeper level of the treatment solution. This allows the superabsorbent polymers to more reliably dissolve in the treatment solution. As a result, the superabsorbent polymers contained in the fibers can be reliably dissolved in the treatment solution and removed from the fibers.

The method may also be (4) the method according to (3) above, wherein the delivery step includes a step of delivering the gaseous substance in a microbubble or nanobubble state.

In this method, the gaseous substance in the form of fine bubbles such as microbubbles or nanobubbles is delivered from the bottom to the top of the treatment solution in the treatment tank. Because fine bubbles have a slower rate of rise, the likelihood of the bubbles contacting with the fibers is increased. In addition, since fine bubbles occupy a narrower region on the surfaces of the fibers, more bubbles can contact with the surfaces of the fibers. The fibers containing the superabsorbent polymers can thus be enveloped in an evenly distributed manner by the fine bubbles, and the contact area between the fibers containing the superabsorbent polymers and the gaseous substance can be further increased. In addition, contact of more bubbles with the fiber surfaces slows the settling rate of the fibers containing the superabsorbent polymers due to the buoyancy of the fine bubbles, and can further increase the contact time between the fibers containing the superabsorbent polymers and the gaseous substance. This allows the superabsorbent polymers contained in the fibers to be more reliably dissolved in the treatment solution and removed from the fibers.

The method may also be (5) the method according to (3) or (4) above, wherein the gaseous substance includes ozone.

In this method, the superabsorbent polymers contained in the fibers are supplied to an ozone-containing aqueous solution. As a result, since the superabsorbent polymers in the fibers can be oxidized and decomposed by ozone, the oxidation and decomposition products can more reliably dissolve in the aqueous solution. In other words, the superabsorbent polymers can be suitably removed from the fibers. As a result, the purity of the regenerated fibers, i.e. the recycled fibers, can be further increased. Furthermore, using an ozone-containing aqueous solution allows the fibers to be bleached, and allows the color of the recycled fibers to more closely approximate white. Using an ozone-containing aqueous solution also allows the fibers to be sterilized, so that the recycled fibers can be made more hygienic. More easily reutilizable recycled fibers can thus be produced. The superabsorbent polymers can thus be suitably removed from the fibers, while efficiently producing recycled fibers.

The method may also be (6) the method according to any one of (1) to (5) above, wherein the fibers are pulp fibers.

In this method, the fibers are pulp fibers. Therefore, dissolution of the superabsorbent polymers present in the pulp fibers into the treatment solution allows the superabsorbent polymers to be suitably removed from the pulp fibers. As a result, the purity of the regenerated pulp fibers, i.e. the recycled pulp, can be further increased. This allows more easily reutilizable recycled pulp to be produced. The superabsorbent polymers can thus be suitably removed from the pulp fibers, while efficiently producing recycled pulp.

The method may also be (7) the method according to any one of (1) to (6) above, wherein the treatment solution is an acidic aqueous solution.

In this method, the treatment solution is an acidic aqueous solution (for example, pH $\leq$5). Even when the superabsorbent polymers contained in the fibers have partial residual water-absorbing capacity, therefore, expansion by water absorption of the superabsorbent polymers can be minimized. This allows the superabsorbent polymers to be dissolved by the treatment solution in a shorter period of time, and allows the superabsorbent polymers to be more reliably removed from the fibers. Particularly when the treatment solution is an ozone-containing aqueous solution, since the ozone in the ozone-containing aqueous solution is less likely to be inactivated, the superabsorbent polymers can be oxidized and decomposed in a short period of time, and the superabsorbent polymers can be more reliably removed from the fibers.

The method may also be (8) the method according to any one of (1) to (7) above, further comprises: an inactivating step of treating the mixture using an aqueous solution capable of inactivating a water absorption performance of superabsorbent polymers, to inactivate the water absorption performance of the superabsorbent polymers in the mixture, prior to the continuous treatment step, and a separating step of separating the fibers including the inactivated superabsorbent polymers from the aqueous solution, prior to the continuous treatment step.

In this method, the water absorption performance of the superabsorbent polymers is reduced by an aqueous solution capable of inactivating the water absorption performance of the superabsorbent polymers, in an inactivating step, and therefore the superabsorbent polymers can be more easily dissolved in a shorter period of time by the treatment solution in the stage of the subsequent continuous treatment step. That is, the superabsorbent polymers can be reliably removed from the fibers.

The method may also be (9) the method according to (8) above, wherein the aqueous solution capable of inactivating the water absorption performance of the superabsorbent polymers in the inactivating step is an acidic aqueous solution.

In this method, since the aqueous solution capable of inactivating the water absorption performance of the superabsorbent polymers is an acidic aqueous solution (for example, pH $\leq$ 2.5), and an acidic aqueous solution has a high effect of inactivating the superabsorbent polymers, it is possible to more reliably reduce the water absorption performance of the superabsorbent polymers at the stage of the inactivating step. This allows the superabsorbent polymers to be more easily dissolved by the treatment solution in a shorter period of time, at the stage of the subsequent continuous treatment step. That is, the superabsorbent polymers can be reliably removed from the fibers.

The method may also be (10) the method according to any one of (1) to (9) above, wherein the treatment tank includes at least a first treatment tank and a second treatment tank that are connected together in series.

In this method, the treatment tank includes at least a first treatment tank and a second treatment tank that are connected together in series. For example, the liquid mixture may be treated in multiple stages in which the first treatment tank is supplied with a liquid mixture and discharges a first treated solution (the liquid mixture or the treatment solution of the first treatment tank), and the second treatment tank is supplied with the first treated solution and discharges a second treated solution (the first treated solution or the treatment solution of the second treatment tank). Since treatment with fresh treatment solution is carried out in separate tanks in this case, the superabsorbent polymers that could not be dissolved in the first treatment tank (the first-stage treatment tank) can easily dissolve in the second treatment tank (the second-stage treatment tank), thereby allowing the superabsorbent polymers to more reliably dissolve and be separated from the fibers, compared to when only a single large-volume treatment tank is provided.

[ADVANTAGEOUS EFFECTS OF INVENTION]

According to the method of the present invention, it is possible to provide a method of producing recycled fibers by removing superabsorbent polymers from fibers containing a superabsorbent polymers, wherein the superabsorbent polymers are suitably removed from the fibers while allowing efficient production of recycled fibers.

BRIEF DESCRIPTION OF DRAWINGS

FIG. 1 is a flow chart showing an embodiment of the method of the present invention.
FIG. 2 is a schematic diagram showing an example of a construction of an apparatus of an oxidizing agent treatment step.
FIG. 3 is a schematic diagram showing an example of another construction of an apparatus of the oxidizing agent treatment step of FIG. 1.
FIG. 4 is a schematic diagram showing an example of yet another construction of an apparatus of an oxidizing agent treatment step.

DESCRIPTION OF EMBODIMENTS

The method of producing recycled fibers from a mixture of fibers and superabsorbent polymers according to an embodiment of the present invention will now be described. This embodiment will be explained as an example in which the fibers are pulp fibers, and the mixture of fibers and superabsorbent polymers is a mixture of pulp fibers and superabsorbent polymers that has been obtained from used absorbent articles. However, the present invention is not limited to this embodiment, and various appropriate modifications may be made without departing from the scope of the subject matter of the present invention. For example, the fibers may be fibers other than pulp fibers, and the mixture of fibers and superabsorbent polymers may be obtained from a source other than used absorbent articles. Used absorbent articles are absorbent articles that have been used by a user, and they include absorbent articles that have absorbed liquid excreta of the user, as well as also ones that are used but have not absorbed excreta, and even ones that are unused.
An example of the construction of an absorbent article will be described first. The absorbent article includes a top sheet, a back sheet and an absorbent body situated between the top sheet and back sheet. The absorbent article may be a disposable diaper, a urine-absorbing pad, a sanitary napkin, a bed sheet or a pet sheet, for example. An example of the size of an absorbent article is a length of about 15 to 100 cm and a width of 5 to 100 cm.
The structural member of the top sheet may be a nonwoven fabric or film, for example, and specifically this includes liquid-permeable nonwoven fabrics, synthetic resin films having liquid permeation holes, and composite sheets thereof. The structural member of the back sheet may also be a nonwoven fabric or film, for example, and specifically this includes liquid-impermeable nonwoven fabrics, liquid-impermeable synthetic resin films, and composite sheets of nonwoven fabrics and synthetic resin films. The materials of the nonwoven fabric or synthetic resin film are not particularly restricted so long as they can be used as absorbent articles, and examples include olefin-based resins such as polyethylene and polypropylene, polyamide-based resins such as 6-nylon and 6,6-nylon, and polyester-based resins such as polyethylene terephthalate (PET) and polybutylene terephthalate (PBT). This embodiment will be described using an absorbent article that has a film as the structural member of the back sheet and a nonwoven fabric as the structural member of the top sheet.
The structural members of the absorbent body may be the absorbent body materials, i.e. pulp fibers and superabsorbent polymers. Pulp fibers are not particularly restricted so long as they can be used as absorbent articles, and cellulosic fibers are an example. Examples of cellulosic fibers include wood pulp, crosslinked pulp, nonwood pulp, regenerated cellulose and semi-synthetic cellulose. The superabsorbent polymers (SAP) are not particularly restricted so long as they can be used in an absorbent article, and examples are polyacrylic acid salt-based, polysulfonic acid salt-based and maleic anhydride salt-based water-absorbent polymers.
One side and the other side of the absorbent body are joined to the top sheet and back sheet, respectively, via an adhesive. The portions (perimeter edge portions) of the top sheet that extend out from the absorbent body to surround the absorbent body, as viewed flat, are joined to the portions (perimeter edge portions) of the back sheet that extend out from the absorbent body to surround the absorbent body so as to surround the absorbent body, with an adhesive. The absorbent body is thus wrapped inside a joined structure between the top sheet and the back sheet. The adhesive is not particularly restricted so long as it can be used in absorbent articles and has its bonding force lowered when softened by warm water as described below, and an example is a hot-melt adhesive. Examples of hot-melt adhesives include types based mainly on rubber, such as styrene-ethylene-butadiene-styrene, styrene-butadiene-styrene and styreneisoprene-styrene, and pressure-sensitive adhesives or heat-sensitive adhesives based mainly on olefins such as polyethylene.

The method of producing recycled pulp fibers from a mixture of pulp fibers and superabsorbent polymers, obtained from used absorbent articles, will now be described. For this embodiment, used absorbent articles are recovered and acquired from an external source for reutilization (recycling). The individual used absorbent articles are recovered in a rolled-up state or folded state with the excreta-discharged top sheet on the inside, so that excreta are not exposed on the front side, and so that odor does not diffuse to the surroundings. The used absorbent articles do not need to be in a rolled-up state or the like.

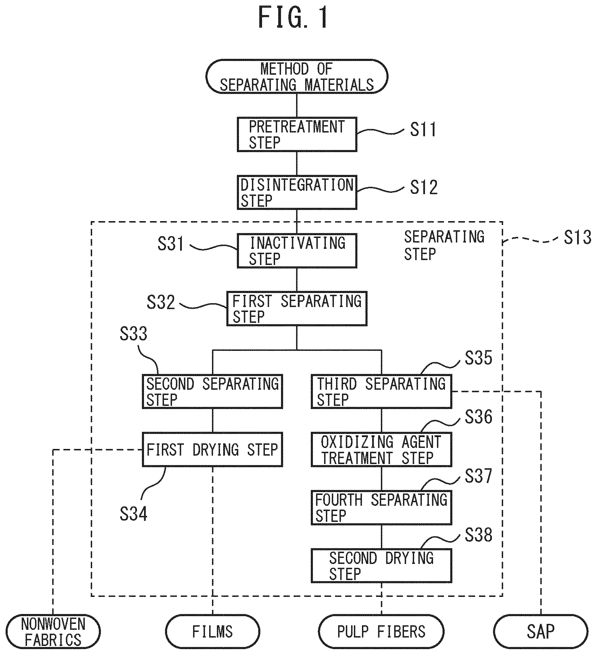

The method of producing recycled pulp fibers from a mixture of pulp fibers and superabsorbent polymers, obtained from used absorbent articles, is included in a method of separating materials in which used absorbent articles are separated into their constituent materials. Fig. 1 is a flow chart showing a method of separating materials in which used absorbent articles are separated into their constituent materials. The method of separating materials is a method in which used absorbent articles are separated into films, nonwoven fabrics, pulp fibers and superabsorbent polymers. The method of separating materials includes a pretreatment step S11, a disintegration step S12 and a separating step S13. The pretreatment step S11 is a step of swelling used absorbent articles with water. The disintegration step S12 is a step of applying physical shock to the swelled used absorbent articles to disintegrate the used absorbent articles into films, nonwoven fabrics and absorbent body materials (pulp fibers and superabsorbent polymers). The separating step S13 is a step of separating the films, nonwoven fabrics, pulp fibers and superabsorbent polymers. The method of producing recycled pulp fibers from a mixture of pulp fibers and superabsorbent polymers is included in the separating step S13 in the method of separating materials. When the mixture of the pulp fibers and superabsorbent polymers is acquired in advance by some method, it is not necessary to carry out steps before the method of producing recycled pulp fibers from the mixture of pulp fibers and superabsorbent polymers in the pretreatment step S11, disintegration step S12 and separating step S13. Each of the steps will now be explained.

In the pretreatment step S11, multiple used absorbent articles are allowed to absorb water and swell while still in the state in which they were recovered from the external source, i.e. without destruction or tearing and while still in any rolled-up or folded state, and also without inactivation of the superabsorbent polymer of the absorbent body. For this embodiment, the used absorbent articles are either allowed to absorb warm water to swell, or after they have absorbed water and swelled, the absorbed water is heated to produce warm water. Warm water is water at a higher temperature than ordinary temperature ($20°C \pm 15°C$ (5 to 35°C: JIS Z 8703).

Usually, the amount of liquid excreta actually absorbed into used absorbent articles is much smaller than the maximum absorption amount of which the absorbent article is capable of absorbing (for example, a maximum absorption of about 10 to 20 mass%). For this embodiment, the used absorbent articles are immersed in warm water in the pretreatment step S11, whereby they are caused to absorb water up to nearly the maximum absorption of the used absorbent articles (for example, to a maximum absorption of 80 mass% or greater). Alternatively, the used absorbent articles are immersed in water at ordinary temperature to cause absorption of water up to nearly the maximum absorption of the used absorbent articles, and then the entire used absorbent articles are heated to the warm water temperature. This allows the used absorbent articles to be brought to a highly expanded state by the warm water or ordinary temperature water (hereunder also referred to simply as "warm water"). A very high internal pressure is produced inside the used absorbent articles as a result. The purpose of using warm water as the water is primarily to weaken the adhesive force of the adhesive, as explained below.

When the used absorbent articles are in the initial state with the back sheets rolled or folded outward (having the top sheets hidden on the inside), they are immersed in warm water, allowing the absorbent bodies of the used absorbent articles to absorb the warm water and expand while in the warm water. As a result, the internal pressure of the used absorbent articles increases, and force acts on the used absorbent articles tending to open them outward, causing the used absorbent articles in a rolled state or folded state to open outward to an approximately flat state. In other words, the used absorbent articles are brought to a flat expanded state in the warm water. Since the absorbent body of each used absorbent article is highly expanded at this time, having absorbed a large amount of warm water, it is highly prone to rupture at the surfaces, i.e. at locations on the top sheet and back sheet that are enveloping the absorbent body. In other words, the pretreatment step S11 causes the used absorbent article to be in a state where the surfaces are prone to tearing and rupture. Incidentally, if the used absorbent article is initially in a flat expanded state, locations on the surface in that state will already be in a state that is highly prone to rupture. This state cannot be produced when the used absorbent article is broken up.

Moreover, when the used absorbent article is immersed in warm water and/or absorbs warm water, the adhesive (such as a hot-melt adhesive) used for joining between each of the structural members is softened by the heat of the warm water, thus lowering the bonding force of the adhesive. For example, the adhesive joining the perimeter edge portions of the top sheet with the perimeter edge portions of the back sheet can be softened by the heat of the warm water, thus lowering the bonding force of the adhesive. In addition, the adhesive joining the top sheet and the absorbent body and the adhesive joining the back sheet and the absorbent body can be softened by the heat of the warm water, thus lowering the bonding force of those adhesives.

In the pretreatment step S11 as described above, expansion of the absorbent body of the used absorbent article can produce a state in which sections of the surface of the used absorbent article are prone to rupture, and a state with lower bonding force of the adhesive. If the used absorbent article is in such a state, the used absorbent article can be reliably disintegrated in the subsequent disintegration step.

The temperature of the warm water in the pretreatment step S11 is not particularly restricted so long as the adhesive in the used absorbent articles can be softened, and it may be 60°C or higher, for example, and is preferably 70°C to 98°C. If the temperature of the warm water is 70°C or higher, the adhesive joining together the structural members can be softened by the heat of the warm water, thus further lowering the bonding force of the adhesive. Limiting the warm water temperature to no higher than 98°C can ensure that the warm water is present as a liquid, thus allowing the warm water to be more reliably absorbed into the used absorbent articles. Expansion of the absorbent body and heating with warm water can more reliably produce a state in which the surfaces of the used absorbent articles are prone to rupture, and a state with lower bonding force of the adhesive. The temperature measurement may be measurement of the warm water temperature when the used absorbent articles are immersed, or it may be measurement of the temperature within 5 mm inward from the surfaces of the used absorbent articles that have absorbed the water up to nearly their maximum absorption (by insertion of the tip of a temperature sensor).

Sterilization of structural materials is also extremely important for reutilization of used absorbent articles. The warm water temperature is preferably set to 70°C or higher to allow an effect of sterilizing (disinfecting) the used absorbent articles to be exhibited.

The treatment time in the pretreatment step S11, i.e. the time for immersion of the used absorbent articles in the warm water, is not particularly restricted so long as the absorbent bodies of the used absorbent articles can expand, and it may be 2 to 60 minutes, for example, or preferably 4 to 30 minutes. If the time is too short the absorbent bodies will not be able to expand sufficiently, and if the time is too long the treatment cost will be wastefully and unnecessarily increased.

The amount of warm water absorbed by the absorbent bodies in the pretreatment step S11 is not particularly restricted so long as the absorbent bodies can expand to a degree allowing the used absorbent articles to disintegrate in the subsequent disintegration step, and it may be, for example, 80 mass% or greater, and preferably 90 mass% or greater, of the maximum absorption of the used absorbent articles. This will allow the used absorbent articles to be brought to the maximally expanded state with the water. As a result, a very high internal pressure can be produced in the absorbent bodies of the used absorbent articles.

The maximum absorption is measured by the following procedure.

(1) An unused absorbent article is dried in an atmosphere of 100°C or higher and the mass of the absorbent article is measured.
(2) When a stretchable material that can form a pocket so that water is less likely to reach the absorbent body (for example, a stretching member surrounding a leg or waist) is disposed in the absorbent article, notches are formed in the stretching member to flatten the absorbent article.
(3) The absorbent article is immersed in a water bath filled with a sufficient amount of tap water, with the top sheet facing downward, and it is allowed to stand for 30 minutes.
(4) After standing, the absorbent article is placed on a net with the top sheet facing downward and drained for 20 minutes, after which the mass of the absorbent article is measured.

The difference in mass before and after immersion in the tap water is defined as the maximum absorption.

In the subsequent disintegration step S12, physical shock is applied to the used absorbent articles that have expanded and swelled by the pretreatment step S11, thus disintegrating the used absorbent articles into films (back sheets), nonwoven fabrics (top sheets) and absorbent body materials (absorbent bodies and superabsorbent polymers: absorbent bodies).

As a result of pretreatment step S 11, the used absorbent articles expand to become flat, with some sections of the surfaces becoming prone to rupture by the expansion, and for this embodiment, in particular, the bonding force of the adhesive is lowered by the heat of the warm water. In disintegration step S12, therefore, physical shock is applied to the used absorbent articles to cause locations on the surface to rupture, especially at the joining sections between the top sheets (nonwoven fabrics) and back sheets (films) where the bonding force has been lowered. This allows the joining sections to become torn (detached). The physical shock is not particularly restricted, and for example, it may be a method of beating the used absorbent articles onto a surface made of a harder material than the used absorbent articles, or a method of pressing the used absorbent articles from both sides by passing them between a pair of mutually facing rolls.

For this embodiment, the disintegration step S12 includes a step of loading swelled used absorbent articles into the bottom section of a rotary drum having a horizontal rotation axis, and a step of rotating the rotary drum around the rotation axis to lift the used absorbent articles to the top section of the rotary drum and slam them against the bottom section. This allows physical shock to be stably, continuously and easily applied to the used absorbent articles. The rotary drum may be a rotary drum in the washing tank of a horizontal washing machine, for example, and therefore the disintegration step S12 may be carried out using an existing horizontal washing machine (for example, an ECO-22B by Inax Corp.). The size of the rotary drum is not particularly restricted so long as it allows the shock step to be carried out, and for example, the inner diameter and depth may be 50 to 150 cm and 30 to 120 cm, respectively. The rotational speed of the rotary drum is also not particularly restricted so long as it allows the shock to be carried out, and it may be 30 times/min to 100 times/min, for example.

The temperature of the used absorbent articles is also kept at a relatively high temperature by the warm water absorbed into the used absorbent articles, and the temperature of the atmosphere in the rotary drum is preferably 70°C or higher and more preferably 75°C or higher, from the viewpoint of minimizing reduction in the temperature of the adhesive and maintaining a sterilizing effect. The temperature in the rotary drum is preferably no higher than 98°C and more preferably no higher than 90°C from the viewpoint of handling the used absorbent articles. The amount of water in the rotary drum is preferably as small as possible, and preferably it is small enough so that the used absorbent articles are not lower than the water surface at least at the bottom section. If the used absorbent articles are lower than the water surface, the shock to the used absorbent articles will be absorbed by the water, making it difficult to apply the intended shock to the used absorbent articles. The time for rotation of the rotary drum is not particularly restricted so long as the top sheets and back sheets and the absorbent body materials can be disintegrated, and it may be 2 to 40 minutes, for example, and is preferably 4 to 20 minutes.

The joining section between the top sheet (nonwoven fabric) and the back sheet (film) of each used absorbent article is ruptured and torn by the physical shock. At the same time, the absorbent body materials (pulp fibers and water-absorbent polymers) of the used absorbent article effuse out (fly out) through the torn section by internal pressure of the absorbent body. This allows the used absorbent article to more reliably disintegrate into the top sheet (nonwoven fabric) and back sheet (film) and the absorbent body materials (pulp fibers and water-absorbent polymers).

In the subsequent separating step S13, the films (back sheets) and nonwoven fabrics (top sheets) are separated from the absorbent body materials (pulp fibers and water-absorbent polymers: absorbent bodies). However, the nonwoven fabrics may also be joined to films. During this time, the back sheets (films) and top sheets (nonwoven fabrics) essentially maintain their original shapes, i.e. the same shapes as when they were in the absorbent articles. Compared to being broken up into fragments before disintegration, therefore, the sizes, shapes and masses of the top sheets (nonwoven fabrics) and back sheets (films) are distinctly different from the sizes and shapes of the absorbent body materials. The top sheets (nonwoven fabrics) and back sheets (films) can thus be easily separated from the absorbent bodies (pulp fibers and water-absorbent polymers) in the separating step S13. The separating method is not particularly restricted, and for example, it may be a method of using a screen through which the absorbent body materials pass but the top sheets and back sheets do not pass. This will allow the structural members such as films to be easily separated from the other structural members while maintaining their shapes without breaking up.

For this embodiment, the separating step S13 may include an inactivating step S31 of inactivating the superabsorbent polymers in an aqueous solution containing an inactivating agent before separating the films, nonwoven fabrics and absorbent body materials, and a first separating step S32 of separating the films and nonwoven fabrics from a mixture containing the pulp fibers, the inactivated superabsorbent polymers and waste water discharged from the superabsorbent polymers by inactivation.

In the inactivating step S31, prior to the first separating step S32, the top sheets (nonwoven fabrics), the back sheets (films) and the absorbent bodies (pulp fibers and superabsorbent polymers) are immersed in an aqueous solution containing an inactivating agent that can inactivate the superabsorbent polymers. This allows inactivation of the superabsorbent polymers adhering to the top sheets, the back sheets and the pulp fibers. It is thus possible to convert the superabsorbent polymers which were in a highly viscous state before inactivation, into superabsorbent polymers in a low-viscosity state, due to dewatering by inactivation.

The inactivating agent is not particularly restricted, and it may be an inorganic acid, an organic acid, lime, calcium chloride, magnesium sulfate, magnesium chloride, aluminum sulfate, aluminum chloride or the like. Inorganic acids and organic acids are preferred among these because they do not leave residue of ash in pulp fibers. When an inorganic acid or organic acid is used as the inactivating agent, the pH of the inorganic acid aqueous solution or organic acid aqueous solution is no higher than 2.5 and preferably 1.3 to 2.4. The aqueous solution containing the inactivating agent may therefore be considered to be an acidic aqueous solution. If the pH is too high, it may not be possible to sufficiently lower the water-absorbing capacity of the superabsorbent polymers. The sterilizing power can also be potentially lowered. If the pH is too low there will be a risk of corrosion of the equipment, and large amounts of alkaline chemicals will be necessary for neutralizing treatment during waste water treatment. Examples of inorganic acids include sulfuric acid, hydrochloric acid and nitric acid, with sulfuric acid being preferred from the viewpoint of cost and the absence of chlorine. Organic acids include citric acid, tartaric acid, glycolic acid, malic acid, succinic acid, acetic acid and ascorbic acid, with hydroxycarbonate-based organic acids such as citric acid, tartaric acid and gluconic acid being particularly preferred. The chelating effect of citric acid traps metal ions and the like present in excreta, allowing their removal, and the washing effect of citric acid can potentially provide a high fouling component-removal effect. The pH will vary depending on the water temperature, where the pH for the purpose of the present invention is the pH measured at an aqueous solution temperature of 20°C. The inorganic acid concentration of the inorganic acid aqueous solution is not particularly restricted so long as the pH of the inorganic acid aqueous solution is no higher than 2.5, but when the inorganic acid is sulfuric acid the sulfuric acid concentration is preferably 0.1 mass% to 0.5 mass%. The organic acid concentration of the organic acid aqueous solution is also not particularly restricted so long as the pH of the organic acid aqueous solution is no higher than 2.5, but when the organic acid is citric acid, the citric acid concentration is preferably 0.8 mass% to 4 mass%.

The treatment temperature in the inactivating step S31, i.e. the temperature of the aqueous solution containing the inactivating agent, is not particularly restricted so long as the inactivation reaction proceeds. The treatment temperature may be room temperature or higher than room temperature, and it may be 15 to 30°C, for example. The treatment time in the inactivating step S31, i.e. the time for immersing the top sheets, back sheets and absorbent body materials in the aqueous solution containing the inactivating agent, is not particularly restricted so long as the superabsorbent polymers are inactivated and dewatered, and it may be 2 to 60 minutes, for example, and is preferably 5 to 30 minutes. The amount of aqueous solution in the inactivating step S31, i.e. the amount of the aqueous solution containing the inactivating agent, is not particularly restricted so long as the inactivation reaction proceeds. The amount of the aqueous solution is preferably 300 to 3000 parts by mass, more preferably 500 to 2500 parts by mass and even more preferably 1000 to 2000 parts by mass with respect to 100 parts by mass of the used absorbent articles.

In the first separating step S32, the top sheets (nonwoven fabrics) and back sheets (films) are separated from the mixture containing the pulp fibers, the inactivated superabsorbent polymers and the waste water that has been discharged from the superabsorbent polymers by inactivation. The waste water is water released from the superabsorbent polymers by dewatering with the aqueous solution containing the inactivating agent in the inactivating step S31, or in other words, waste water that includes liquid from excreta and water from the warm water.

The method of separating the top sheets and back sheets from the pulp fibers, superabsorbent polymers and waste water in the first separating step S32 is not particularly restricted. For example, the products of the inactivating step (top sheets, back sheets, pulp fibers, superabsorbent polymers, waste water, etc.) may be discharged while passing through a screen with a mesh opening of 5 to 100 mm and preferably a mesh opening of 10 to 60 mm. This will allow the pulp fibers, superabsorbent polymers and waste water to be left in the drainage while the top sheets and back sheets remain on the screen, thereby separating them. Other large matters such as nonwoven fabrics and films may also remain on the screen. In particular, since the superabsorbent polymers are in a highly viscous state before inactivation, separation of the superabsorbent polymer adhering to the top sheets, back sheets and pulp fibers is by no means easy. After inactivation, however, the superabsorbent polymers are in a state of low viscosity due to the dewatering, and therefore the superabsorbent polymers adhering to the top sheets, back sheets and pulp fibers can be easily separated from the top sheets, back sheets and pulp fibers. Therefore, the structural members of the absorbent articles can be efficiently separated and recovered.

For this embodiment, the separating step S13 may further include a second separating step S33 of removing the adhesive at the joining sections between the films and other members by a solvent that dissolves the adhesive at the joining sections. For this embodiment, the adhesive at the joining sections between the films, nonwoven fabrics and absorbent body materials is removed by a solvent that dissolves the adhesive at the joining sections.

In the second separating step S33, the adhesive at the joining sections between the films (back sheets) and the other members (the nonwoven fabrics of the top sheets, and the absorbent body materials of the absorbent bodies remaining on the surfaces of the top sheets and back sheets) is removed by a solvent. This allows the films and other members to be separated from each other while maintaining their shapes without breaking up. The structural members, such as films, of the absorbent articles can therefore be efficiently recovered. Moreover, since the films and other members can be separated without leaving the adhesive in the films, the films can be reused as highly pure resins. This can minimize adverse effects of the adhesive when the films are reutilized. This description for films also applies to nonwoven fabrics.

The solvent to be used in the second separating step S33 is not particularly restricted so long as it can dissolve the adhesive, and examples include terpenes including at least one of terpene hydrocarbons, terpene aldehydes and terpene ketones. In this step, a terpene-containing aqueous solution is used, with the terpene concentration of the aqueous solution being 0.05 mass% to 2 mass%, for example. The concentration is more preferably 0.075 to 1 mass%. If the terpene concentration is too low, it may not be possible to dissolve the adhesive at the joining sections. Cost may increase if the terpene concentration is too high, on the other hand. The terpene not only dissolves the adhesive, such as a hot-melt adhesive, but also has a washing effect on contaminating oils. Therefore, when printing or the like is present on the structural members of the absorbent articles, such as their back sheets, the terpene can also decompose and remove the printing ink.

Terpene hydrocarbons include myrcene, limonene, pinene, camphor, sabinene, phellandrene, paracymene, ocimene, terpinene, carene, zingiberene, caryophyllene, bisabolene and cedrene. Limonene, pinene, terpinene and carene are preferred among these. Examples of terpene aldehydes include citroneral, citral, cyclocitral, safranal, phellandral, perillaldehyde, geranial and neral. Examples of terpene ketones include camphor and thujone. Terpene hydrocarbons are preferred terpenes, with limonene being particularly preferred. Limonenes are of three types: d-limonene, 1-limonene and dipentene (dl-limonene), and all of them are suitable for use. A single type of terpene may be used, or two or more may be used in combination.

The treatment temperature in the second separating step S33, i.e. the temperature of the aqueous solution containing the solvent, is not particularly restricted so long as dissolution of the adhesive proceeds to disintegrate the used absorbent articles into its structural members. The treatment temperature may be either room temperature or higher than room temperature, and it may be 15 to 30°C, for example. The treatment time in the second separating step S33, i.e. the time for immersion of the top sheets, back sheets and absorbent body materials in the aqueous solution containing the solvent, is not particularly restricted so long as dissolution of the adhesive proceeds to disintegrate the used absorbent articles into their structural members. The treatment time may be 2 to 60 minutes, for example, and is preferably 5 to 30 minutes. The amount of aqueous solution in the second separating step S33, i.e. the amount of the aqueous solution containing the solvent, is also not particularly restricted so long as dissolution of the adhesive proceeds to disintegrate the used absorbent articles into their structural members. The amount of the aqueous solution is preferably 300 to 3000 parts by mass and more preferably 500 to 2500 parts by mass with respect to 100 parts by mass of the used absorbent articles. The amount of adhesive remaining on the films, nonwoven fabrics and absorbent body materials after the second separating step S33 can be limited to no greater than 1 mass% with respect to the films, nonwoven fabrics and absorbent body materials.

As another preferred mode of this embodiment, the second separating step S33 is carried out in tandem with the inactivating step S31. That is, the superabsorbent polymers adhering to the top sheets, back sheets and pulp fibers may be inactivated while dissolving the adhesive adhering to the top sheets, back sheets and pulp fibers. In this case, the aqueous solution used to immerse the top sheets, back sheets, pulp fibers and superabsorbent polymers may be an aqueous solution containing both the inactivating agent and the solvent. This will allow the back sheets (films), top sheets (nonwoven fabrics) and absorbent bodies (pulp fibers and superabsorbent polymers) to be in an essentially separated state in the aqueous solution during the inactivating step S31. In addition, it will allow separation of the back sheets (films), top sheets (nonwoven fabrics) and absorbent bodies (pulp fibers and superabsorbent polymers) during the subsequent first separating step, so that the second separating step S33 can be omitted. In this case, the back sheets (films) and top sheets (nonwoven fabrics) are essentially separated by removal of the adhesive.

For this embodiment, the separating step S13 may further include, after the step of removing the adhesive at the joining sections, a first drying step S34 of drying the films and removing the solvent by an atmosphere at higher temperature than room temperature, or by hot air. For this embodiment, the nonwoven fabrics are also dried in this step.

Sterilization is extremely important for reutilization of used absorbent articles. In the first drying step S34, a step of drying the separated films (back sheets) and nonwoven fabrics (top sheets) with a high-temperature atmosphere or hot air is carried out. The drying temperature may be 105 to 210°C, for example, and is preferably 110 to 190°C. The drying time will differ depending on the drying temperature, but it may be 10 to 120 minutes, for example, and is preferably 15 to 100 minutes. This will not only allow vaporizing removal of the residual solvent on the surfaces of the films and nonwoven fabrics, but will also allow sterilization of the films and nonwoven fabrics by the high-temperature atmosphere or hot air. The solvent can thus be removed while providing a sterilizing (disinfecting) effect.

For this embodiment, however, the separating step S13 may also include a third separating step S35 of separating the pulp fibers from the separated mixture. The method of separating the pulp fibers from the separated mixture (including pulp fibers, superabsorbent polymers and waste water) in the third separating step S35 is not particularly restricted, and for example, the separated mixture may be discharged while passing through a screen with a mesh opening of 0.1 to 4 mm, and preferably a mesh opening of 0.15 to 2 mm. This will allow the superabsorbent polymers and waste water to be left in the drainage while the pulp fibers (with residual superabsorbent polymers primarily on the surfaces) remain on the screen, thereby separating the pulp fibers from the mixture. The pulp fibers include numerous impurities, but they can still be reutilized depending on the purpose. The separated pulp fibers (with residual superabsorbent polymers primarily on the surfaces) are mixed with water in a prescribed proportion and supplied to the oxidizing agent treatment step S36 as a liquid mixture having the prescribed amount of pulp fibers.

The separating step S13 of this embodiment also includes an oxidizing agent treatment step S36 of treating the separated pulp fibers with an aqueous solution that includes an oxidizing agent, for molecular weight reduction, solubilization and removal of the residual superabsorbent polymers in the pulp fibers.

In the oxidizing agent treatment step S36, the inactivated superabsorbent polymers remaining primarily on the surfaces of the separated pulp fibers are oxidatively decomposed with an oxidizing agent in the aqueous solution, being converted to low-molecular-weight organic materials that are soluble in the aqueous solution, and is removed from the surfaces of the pulp fibers. The state of the superabsorbent polymers which are oxidatively decomposed and converted to low-molecular-weight organic materials that are soluble in the aqueous solution is a state in which the superabsorbent polymers pass through a 2 mm screen. This allows removal of the impurities such as superabsorbent polymers in the pulp fibers, to produce pulp fibers with a high level of purity. The oxidizing agent treatment can also accomplish secondary sterilization, bleaching and deodorization of the pulp fibers.

The oxidizing agent is not particularly restricted so long as it can oxidatively decompose, reduce in molecular weight and solubilize the inactivated superabsorbent polymers, and examples include chlorine dioxide, ozone and sodium hypochlorite. Ozone is preferred among these from the viewpoint of high decomposition performance, bleaching performance, sterilization performance and deodorizing performance, and ozone is used for this embodiment. When ozone is used as the oxidizing agent, the oxidizing agent treatment may be carried out by contacting the mixture containing the pulp fibers and superabsorbent polymers with the ozone, or more specifically, an ozone-containing gas may be blown into the aqueous solution containing the pulp fibers and the superabsorbent polymers.

The oxidizing agent treatment step S36 will now be described in further detail.

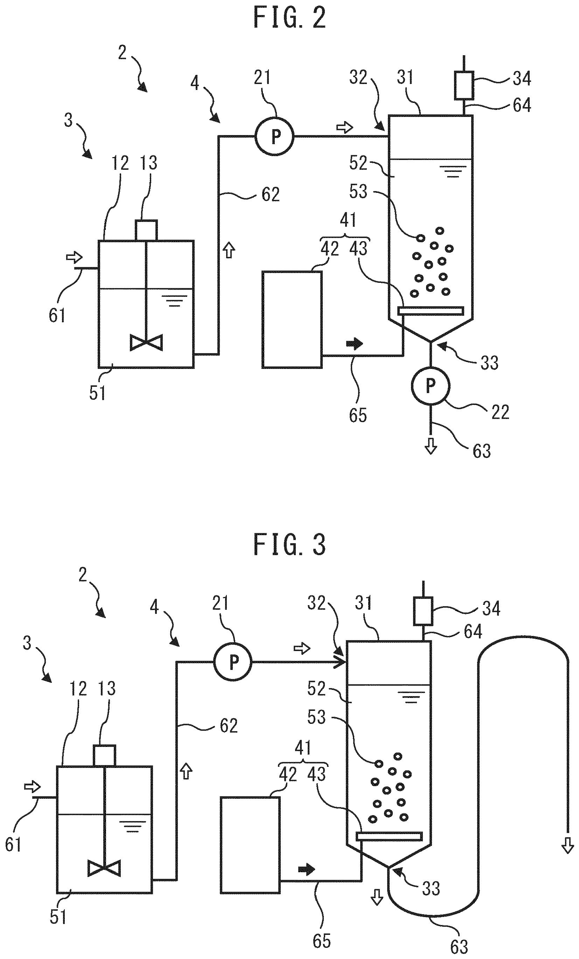

The apparatus used to carry out the oxidizing agent treatment step S36 will be described first. Fig. 2 is a schematic diagram showing an example of the construction of an apparatus 2 for carrying out the oxidizing agent treatment step S36. The apparatus 2 includes a liquid mixture storage device 3 that stores the liquid mixture 51 containing water and the pulp fibers that have been separated in the third separating step S35, and an oxidizing agent treatment device 4 that oxidatively decomposes the superabsorbent polymers in the pulp fibers in the liquid mixture 51 by the treatment solution 52, removing them from the pulp fibers.

The liquid mixture storage device 3 includes a liquid mixture tank 12 and a stirrer 13. The liquid mixture tank 12 stores a liquid mixture 51 that includes the pulp fibers in water, in a prescribed proportion, that has been supplied through piping 61. The stirrer 13 stirs the liquid mixture 51 in the liquid mixture tank 12 so that the pulp fibers in the liquid mixture 51 do not separate from the water and settle at the bottom of the liquid mixture 51.

The oxidizing agent treatment device 4 includes a feed pump 21, a treatment tank 31, an ozone supply apparatus 41, a delivery pump 22 and an ozone decomposer 34. The treatment tank 31 has an acidic aqueous solution as the treatment solution 52. The feed pump 21 continuously supplies the liquid mixture of the liquid mixture tank 12 into the treatment tank 31 at a first flow rate, through the piping 62. The ozone supply apparatus 41 supplies ozone-containing gas 53, as a gaseous substance, into the treatment tank 31. The ozone generator 42 of the ozone supply apparatus 41 may be, for example, an ED-OWX-2 ozone water exposure tester by EcoDesign, Inc. or an OS-25V ozone generator by Mitsubishi Electric Corp. The ozone-containing gas 53 may also be another type of gas that contains ozone, such as oxygen gas containing ozone. A nozzle 43 that delivers the ozone-containing gas 53 supplied into the treatment tank 31 through the piping 65, into the treatment tank 31, is installed at the bottom (preferably the base) of the treatment tank 31. The nozzle 43 continuously supplies the ozone-containing gas 53 as fine bubbles into the treatment solution 52, from the bottom to the top of the treatment solution 52 (treatment tank 31). The delivery pump 22 continuously discharges the treatment solution 52 in the treatment tank 31 out of the treatment tank 31 through the piping 63, at a second flow rate. The ozone decomposer 34 receives the ozone-containing gas 53 that has accumulated at the top of the treatment tank 31 through the piping 64, decomposes and detoxifies the ozone, and discharges it to the outside. The treatment solution 52 in the treatment tank 31, incidentally, consists of the treatment solution 52 alone before the oxidizing agent treatment step S36 starts, being converted to a mixture of the treatment solution 52 and liquid mixture 51 after starting, and for this embodiment the solution in the treatment tank 31, including the solution including the mixture of the treatment solution 52 and the liquid mixture 51, is also considered to be the treatment solution 52.

The specific method used in the oxidizing agent treatment step S36 will now be described.

The pulp fibers separated in the third separating step S35 (the superabsorbent polymers remaining primarily on the surfaces) are mixed with water to a predetermined concentration, for use as the liquid mixture 51. The concentration of the pulp fibers in the liquid mixture 51 is set to the predetermined concentration in its state where it is loaded in the treatment tank 31 and mixed with the treatment solution 52. The liquid mixture 51 is supplied to the liquid mixture tank 12 through the piping 61, and stored. Since the specific gravity of pulp fibers is greater than 1, the liquid mixture 51 is agitated by a stirrer 13 in the liquid mixture tank 12 so that the pulp fibers are not separated from the water.

The liquid mixture 51 in the liquid mixture tank 12 (with the superabsorbent polymers remaining primarily on the surfaces) is also continuously supplied at a first flow rate to the treatment tank 31 through the piping 62, by control of the flow rate at the feed pump 21. The pulp fibers are thus supplied into the treatment solution 52 from a supply port 32 provided at the top of the treatment tank 31. The treatment solution 52 is an acidic aqueous solution, and its specific gravity is approximately 1. Therefore, the pulp fibers gradually settle from the top toward the bottom of the treatment solution 52.

The ozone-containing gas 53 produced at the ozone generator 42, on the other hand, is supplied to the treatment tank 31 through piping 65, and is released as fine bubbles (for example, microbubbles or nanobubbles) into the treatment solution 52 through the nozzle 43 of the treatment tank 31. In other words, the ozone-containing gas 53 gradually rises from the bottom toward the top of the treatment solution 52. This step may be considered to be a delivery step in which bubbles of the ozone-containing gas 53 are continuously delivered from the bottom toward the top of the treatment solution 52.

Inside the treatment solution 52, the pulp fibers that settle from top to bottom and the ozone-containing gas 53 that rises from bottom to top proceed in opposite directions and impact each other. The ozone-containing gas 53 also adheres to the surfaces of the pulp fibers, enveloping the pulp fibers. During this time, the ozone in the ozone-containing gas 53 reacts with the superabsorbent polymers in the pulp fibers, whereby the superabsorbent polymers are oxidatively decomposed and dissolved in the treatment solution 52. This causes the superabsorbent polymers on the pulp fibers to be removed from the pulp fibers. The pulp fibers also settle at the base of the treatment tank 31, while the ozone-containing gas 53 escapes to the space at the top of the treatment tank 31.

Next, the treatment solution 52 (including pulp fibers) at the base of the treatment tank 31 are continuously discharged at a second flow rate out of the treatment tank 31 from a discharge port 33 of the treatment tank 31, through piping 63, by control of the flow rate at the delivery pump 22. The ozone in the ozone-containing gas 53 that has accumulated at the top of the treatment tank 31 is decomposed and detoxified by the ozone decomposer 34, and is released to the outside.

Thus, the liquid mixture 51 is continuously supplied at the first flow rate into the treatment tank 31 from the top of the treatment tank 31, while the treatment solution 52 is continuously discharged at the second flow rate out of the treatment tank 31 from the bottom (base) of the treatment tank 31. It is thus possible to forcibly generate a continuous and stable flow of fluid (including pulp fibers) from top to bottom in the treatment tank 31.

The treatment solution 52 discharged from the treatment tank 31 includes pulp fibers from which the superabsorbent polymers have been removed, and it also includes low-molecular-weight organic materials produced by oxidative decomposition of the superabsorbent polymers. The pulp fibers are recovered by a step downstream from the delivery pump 22, such as the fourth separating step S37 described below. The pulp fibers from which the superabsorbent polymers has been removed may be considered high-quality pulp fibers (recycled pulp fibers), having very low impurities.

The oxidizing agent treatment step S36 may include a continuous treatment step in which the liquid mixture 51 including the pulp fibers containing the superabsorbent polymers and water, is continuously supplied at a first flow rate into the treatment tank 31 holding a treatment solution 52 that is capable of dissolving the superabsorbent polymer, while the treatment solution 52 containing the fibers from which superabsorbent polymers have been dissolved and removed is continuously discharged at a second flow rate out of the treatment tank 31. That is, the oxidizing agent treatment step S36 may include a method of producing recycled pulp fibers from a mixture of pulp fibers and superabsorbent polymers.

In this method, at least the liquid mixture 51 containing the superabsorbent polymers and pulp fibers is continuously supplied at a first flow rate into the treatment tank 31 holding the treatment solution 52 that is capable of dissolving the superabsorbent polymer, while the treatment solution 52 that includes the pulp fibers from which the superabsorbent polymers has been removed and low-molecular-weight organic materials generated by oxidative decomposition of the superabsorbent polymer, is continuously discharged at a second flow rate, out of the treatment tank 31. With such a construction, it is possible to forcibly generate a continuous and stable flow of fluid (including pulp fibers) from the supply port 32 of the treatment tank 31 where the liquid mixture 51 is supplied, toward the discharge port 33 where the treatment solution 52 is discharged. The fluid flow, i.e. the water stream, can increase the area of pulp fibers contacting with the treatment solution even when the throughput of pulp fibers is large, and allows the pulp fibers to be contacted with the treatment solution in an evenly distributed manner. It is therefore possible to minimize irregularity in the pulp fiber treatment even with a large throughput of pulp fibers, and to properly dissolve the superabsorbent polymers in the treatment solution. This can increase the purity of the regenerated pulp fibers, i.e. the recycled pulp fibers, allowing production of easily reutilizable recycled pulp fibers. The superabsorbent polymers can thus be suitably removed from the pulp fibers, while efficiently producing recycled pulp fibers.

The first flow rate and second flow rate are preferably identical. If the first flow rate and second flow rate are identical, then the amount of treatment solution 52 in the treatment tank 31 can be kept constant, allowing stable and continuous treatment to be carried out. However, the first flow rate and second flow rate may be periodically varied if the amount of treatment solution 52 in the treatment tank 31 can be kept approximately constant, i.e. so long as the amount of treatment solution 52 in the treatment tank 31 neither increases nor decreases to any large degree. In other words, the first flow rate and second flow rate do not need to be completely identical at all times, and they may be only essentially identical when averaged over time. Here, "essentially identical" means a difference of within 5%. Stable continuous treatment can also be carried out in this case.

When ozone-containing gas 53 is to be supplied to the treatment solution 52, the ozone concentration in the treatment solution 52 is not particularly restricted so long as it is a concentration allowing decomposition of the superabsorbent polymers, and it may be, for example, 1 to 50 ppm by mass, preferably 2 to 40 ppm by mass and more preferably 3 to 30 ppm by mass. If the ozone concentration of the treatment solution 52 is too low, it may not be possible to completely solubilize the superabsorbent polymers, potentially leading to residue of the superabsorbent polymers in the pulp fibers. If the ozone concentration of the treatment solution 52 is too high, conversely, the oxidizing power will increase, potentially damaging the pulp fibers and possibly causing problems in terms of safety. The ozone treatment temperature is not particularly restricted so long as it is a temperature allowing decomposition of the superabsorbent polymers, and it may be room temperature, or higher than room temperature, for example.

The concentration of ozone in the treatment solution 52 (aqueous solution) was measured by the following method.

In a 100 mL graduated cylinder containing approximately 0.15 g of potassium iodide and 5 mL of a 10% citric acid solution, there was placed and reacted 85 mL of an ozone-dissolved treatment solution 52. After reaction, it was transferred to a 200 mL Erlenmeyer flask, and after subsequently adding a starch solution and causing coloration to violet, titration was performed with 0.01 mol/L sodium thiosulfate while stirring until the mixture became colorless. The following formula was used based on the titration value, to calculate the concentration of ozone in the aqueous solution.

$$\text{Concentration of ozone in aqueous solution (ppm by mass)} = 0.01 \text{ mol/L sodium}$$
$$\text{thiosulfate (mL) required for titration} \times 0.24 \times 0.85 \text{ (mL)}$$

The ozone concentration in the ozone-containing gas 53 is preferably 40 to 200 $g/m^3$, more preferably 40 to 150 $g/m^3$ and even more preferably 40 to 100 $g/m^3$. If the ozone concentration in the ozone-containing gas 53 is too low, it may not be possible to completely solubilize the superabsorbent polymers, potentially leading to residue of the superabsorbent polymers in the pulp fibers. If the concentration in the ozone-containing gas 53 is too high, damage to the pulp fibers, lower safety or increased manufacturing cost may result. The ozone concentration in the ozone-containing gas 53 is determined using an ultraviolet absorption ozone concentration meter (for example, an OZM-5000G ozone monitor by EcoDesign, Inc.).

The concentration of the pulp fibers in the treatment solution 52 (including the superabsorbent polymers) is not particularly restricted so long as it is a concentration allowing the superabsorbent polymers to be decomposed by the ozone in the treatment solution 52, and it may be 0.1 to 20 mass%, for example, preferably 0.2 to 10 mass%, and more preferably 0.3 to 5 mass%. If the concentration of pulp fibers is too high, it may not be possible to completely solubilize the superabsorbent polymers, potentially leading to residue of the superabsorbent polymers in the pulp fibers. If the concentration of the pulp fibers is too low, conversely, the oxidizing power will increase, potentially damaging the pulp fibers and possibly causing problems in terms of safety. The concentration of the pulp fibers in the liquid mixture 51 (including the superabsorbent polymers) is set as appropriate based on the concentration of the pulp fibers in the treatment solution 52, and the amount of treatment solution 52.

When ozone is to be supplied to the treatment solution 52 including the pulp fibers and superabsorbent polymers, the treatment solution 52 is preferably acidic. More preferably, the pH of the treatment solution 52 is higher than 0 and no higher than 5, and even more preferably it is 1.5 to 2.5. Treatment in an acidic state causes the inactivation of the ozone to be suppressed, and can improve the superabsorbent polymer-decomposing and removal effect of the ozone, allowing the superabsorbent polymers to be decomposed in a shorter time. In order to maintain the pH of the treatment solution, the pH of the liquid mixture 51 may be adjusted to the same pH as the treatment solution 52, and the liquid mixture 51 subsequently supplied to the treatment tank 31. Alternatively, the pH of the treatment solution 52 may be monitored with a pH sensor, and when the pH has fluctuated from the neutral end, a prescribed amount of acidic solution corresponding to the degree of fluctuation may be added to the treatment solution 52.

The amount of treatment solution 52 (including the liquid mixture 51) in the treatment tank 31 is not particularly restricted so long as it is an amount allowing decomposition of the superabsorbent polymers, and preferably the volume V (units: L) of the treatment solution 52 and the mass W (units: kg) of the pulp fibers in the treatment tank 31 satisfy $30 \leq V/W \leq 1000$. A more preferred range is $50 \leq V/W \leq 400$, and an even more preferred range is $100 \leq V/W \leq 200$. If V/W is too small, it may not be possible to completely solubilize the superabsorbent polymers in the pulp fibers, potentially leading to residue of the superabsorbent polymers in the pulp fibers. If V/W is too large, the manufacturing cost can potentially increase. The volume V of the treatment tank 31 is not particularly restricted and may be 50 to 80 L, for example.

The flow rate $R_O$ (units: L/min) of the ozone-containing gas and the volume V (units: L) of the treatment solution 52 in the treatment tank 31 preferably satisfy $0.01 \leq R_O/V \leq 1.5$. A more preferred range is $0.03 \leq R_O/V \leq 1.0$, and an even more preferred range is $0.06 \leq R_O/V \leq 0.5$. If $R_O/V$ is too small, it may not be possible to completely solubilize the superabsorbent polymers, potentially leading to residue of the superabsorbent polymers in the pulp fibers. If $R_O/V$ is too large, damage to the pulp fibers, reduced safety or increased manufacturing cost can potentially result. The flow rate $R_O$ of the ozone-containing gas is not particularly restricted, and it may be 3 to 6 L/min, for example.

The time during which the pulp fibers reside in the treatment tank 31, i.e. the time during which the pulp fibers are treated in the treatment solution 52 (hereunder referred to as "in-tank treatment time") is not particularly restricted so long as the superabsorbent polymers can be decomposed. The in-tank treatment time may be short if the ozone concentration of the treatment solution 52 is high, but it must be a longer time if the ozone concentration of the treatment solution 52 is low. For example, the in-tank treatment time may be 2 minutes to 60 minutes, and is preferably 5 minutes to 30 minutes. The product of the ozone concentration (ppm by mass) in the treatment solution 52 and the in-tank treatment time (min) (hereunder also referred to as "CT value") is preferably 100 to 6000 ppm·min, more preferably 200 to 4000 ppm·min and even more preferably 300 to 2000 ppm-min. If the CT value is too small, it may not be possible to completely solubilize the superabsorbent polymers, potentially leading to residue of the superabsorbent polymers in the recovered pulp fibers. Conversely, an excessively large CT value can potentially result in damage to the pulp fibers, reduced safety and increased manufacturing cost.

While the pulp fibers are present in the treatment tank 31, the superabsorbent polymers undergoes oxidative decomposition action by the ozone. This causes the three-dimensional network structure of the superabsorbent polymers to break up. Consequently, the superabsorbent polymers lose its water retention while being converted to low-molecular-weight materials. The low-molecular-weight materials also dissolve in the treatment tank 31 where the pulp fibers are present. The low-molecular-weight materials dissolved in the treatment solution 52 are discharged together with the treatment solution 52, but the superabsorbent polymer solid particles do not remain in the treatment solution 52. In addition, the bactericidal action of the ozone in this step results in primary disinfection of the used sanitary product.

As a preferred mode of this embodiment, the oxidizing agent treatment step S36 (continuous treatment step) includes a step of continuously supplying the liquid mixture 51 from the top of the treatment tank 31 while continuously discharging the treatment solution 52 from the bottom of the treatment tank 31. During this time, the specific gravity of the pulp fibers containing the superabsorbent polymers of the liquid mixture 51 is greater than the specific gravity of the treatment solution 52. Therefore, since gravity exceeds buoyancy in the treatment solution 52, the pulp fibers containing the superabsorbent polymers naturally settle. Consequently, if the liquid mixture 51, i.e. the pulp fibers, are supplied into the treatment tank 31 from the bottom toward the top, they will tend to return to the bottom again. In addition, when the flow of fluid generated in the treatment tank 31 is from bottom to top, portions may be generated that lose to gravity inside the fluid and settle in the corners or edges of the base of the treatment tank 31. In such cases, the efficiency of treatment for removal of the superabsorbent polymers from the pulp fibers is reduced. In this preferred mode, therefore, the liquid mixture 51 is supplied through the top of the treatment tank 31 and the treatment solution 52 is discharged from the bottom of the treatment tank 31, so that the pulp fibers containing the superabsorbent polymers move from top to bottom in the treatment solution 52. It is thus possible to generate a continuous and stable fluid flow from top to bottom of the treatment tank 31. As a result, the pulp fibers containing the superabsorbent polymers can move more smoothly from top to bottom of the treatment tank 31 by gravity and the fluid flow, while undergoing treatment by the treatment solution 52, without settling in the corners or on the edges inside the treatment tank 31. Therefore, the pulp fibers that have completed treatment by the treatment solution 52 can be discharged out directly from the bottom of the treatment tank 31. In other words, the pulp fibers containing the superabsorbent polymers can be efficiently treated. This allows recycled fibers to be efficiently produced.

As a preferred mode of this embodiment, the treatment solution 52 that is capable of dissolving the superabsorbent polymers is an aqueous solution including a gaseous substance that is able to decompose the superabsorbent polymers in a soluble manner. The oxidizing agent treatment step S36 (continuous treatment step) further includes a delivery step of continuously delivering gaseous bubbles from the bottom toward the top of the treatment solution 52. In this preferred mode of the method, a countercurrent is produced in which the gaseous substance moves from the bottom to the top of the treatment solution 52, and the pulp fibers containing the superabsorbent polymers move from the top to the bottom. The likelihood of contact between the superabsorbent polymers in the pulp fibers and the gaseous substance can thereby be increased. This also allows the pulp fibers containing superabsorbent polymers to contact with a higher concentration of gaseous substance with deeper settling. Therefore, the superabsorbent polymers that could not be dissolved in the treatment solution 52 with only the gaseous substance contacting with the treatment solution 52 up to a shallow level, can be contacted with a higher concentration of gaseous substance up to a deeper level of the treatment solution 52. This allows the superabsorbent polymers to reliably dissolve in the treatment solution 52. As a result, the superabsorbent polymers in the pulp fibers can be reliably dissolved in the treatment solution and removed from the fibers. When ozone-containing gas is used as the gaseous substance, the embodiment described above that has a delivery step can increase the ozone consumption efficiency to about 1.5 to 2 times compared to using a treatment solution that already contains the gaseous substance, without a delivery step, or in other words, it can reduce consumption.

As a preferred mode of this embodiment, the delivery step includes a step of delivering the gaseous substance in the form of microbubbles or nanobubbles. Microbubbles are bubbles with diameters of about 1 to 1000 $\mu$m and preferably about 10 to 500 $\mu$m, while nanobubbles are bubbles with diameters of about 100 to 1000 nm and preferably about 100 to 500 nm. Microbubbles or nanobubbles are therefore fine bubbles having the properties of large surface area per unit volume and a slow rate of rise through liquids. As a preferred mode of this method, the gaseous substance in the form of fine bubbles is delivered from the bottom toward the top of the treatment solution 52 in the treatment tank 31. The pulp fibers containing the superabsorbent polymers, on the other hand, move from the top toward the bottom. Because fine bubbles have a slower rate of rise during this time, the likelihood of the bubbles contacting with the pulp fibers is increased. In addition, since fine bubbles occupy a narrower region on the surfaces of the pulp fibers, more bubbles can contact with the surfaces of the pulp fibers. The pulp fibers containing the superabsorbent polymers can thus be enveloped in an evenly distributed manner by the fine bubbles, and the contact area between the pulp fibers containing the superabsorbent polymers and the gaseous substance can be further increased. In addition, contact of more bubbles with the pulp surfaces slows the settling rate of the pulp fibers containing the superabsorbent polymers due to the buoyancy of the fine bubbles, and can further increase the contact time between the pulp fibers containing the superabsorbent polymers and the gaseous substance. This allows the superabsorbent polymers in the pulp fibers to be more reliably dissolved in the treatment solution 52 and removed from the pulp fibers.

As a preferred mode of this embodiment, the gaseous substance includes ozone, i.e. it is an ozone-containing gas 53. As a preferred mode of this method, therefore, the superabsorbent polymers in the pulp fibers is supplied to the ozone-containing aqueous solution as the treatment solution. As a result, since the superabsorbent polymers in the pulp fibers can be oxidized and decomposed by ozone, the oxidation and decomposition products can reliably dissolve in the aqueous solution. That is, the superabsorbent polymers can be suitably removed from the pulp fibers. As a result, the purity of the regenerated pulp fibers, i.e. the recycled pulp fibers, can be even further increased. Furthermore, using an ozone-containing aqueous solution allows the pulp fibers to be bleached, and allows the color of the recycled pulp fibers to more closely approximate white. Using an ozone-containing aqueous solution also allows the pulp fibers to be sterilized, so that the recycled pulp fibers can be made more hygienic. More easily reutilizable recycled pulp fibers can thus be produced. The superabsorbent polymers can thus be suitably removed from the pulp fibers, while efficiently producing recycled pulp fibers.

As a preferred mode of this embodiment, the treatment solution 52 is an acidic aqueous solution, such as an acidic aqueous solution with pH ≤ 2.5. In this case, even when the superabsorbent polymers in the pulp fibers in the liquid mixture 51 have partial residual water-absorbing capacity, therefore, expansion by water absorption of the superabsorbent polymers can be minimized. This allows the superabsorbent polymers to be dissolved by the treatment solution 52 in a short period of time, and allows the superabsorbent polymers to be more reliably removed from the fibers. Particularly when the treatment solution 52 is an ozone-containing aqueous solution, since the ozone in the ozone-containing aqueous solution is less likely to be inactivated, the superabsorbent polymers can be oxidized and decomposed in a shorter period of time, and the superabsorbent polymers can be more reliably removed from the fibers.

As another preferred embodiment, the construction of the treatment tank 31 may be a construction different from the one illustrated in Fig. 2. Fig. 3 is a schematic diagram showing an example of another construction of an apparatus 2 for the oxidizing agent treatment step of Fig. 1. The apparatus 2 of Fig. 3 differs from the apparatus 2 of Fig. 2 in that the piping 63 of the oxidizing agent treatment device 4 has a continuous U-shaped structure in which two U-shaped pipes are mutually reversed and continuously connected, and the delivery pump 22 is omitted. In this case, when the piping 63 is filled with the treatment solution 52 and the liquid level height of the treatment solution 52 in the treatment tank 31 is higher than the liquid level height of the liquid in the tank in the subsequent step that is connected by piping 63, the treatment solution 52 is discharged to the tank of the subsequent step through the piping 63 by the siphoning principle. Therefore, if the liquid level height of the treatment solution 52 in the treatment tank 31 and the liquid level height of the liquid in the tank in the subsequent step are equal before the start of treatment, then when treatment is initiated and the liquid mixture 51 is continuously supplied into the treatment tank 31 at the first flow rate, the treatment solution 52 will be discharged through the piping 63 to the tank of the subsequent step by the siphoning principle, with second flow rate = first flow rate. However, the liquid level height of the liquid in the tank of the subsequent step during treatment is kept at the height before treatment is started. This obviates the need for the delivery pump 22, making it unnecessary to control the second flow rate by the delivery pump 22.

For this embodiment, the separating step S13 may further include a fourth separating step S37 of separating the pulp fibers from the treatment solution 52 that has been discharged from the treatment tank 31, and a second drying step S38 of drying the separated pulp fibers.

The method of separating the pulp fibers from the treatment solution 52 that has been discharged from the treatment tank 31, in the fourth separating step S37, is not particularly restricted, and it may be a method in which the treatment solution 52 containing the pulp fibers is passed through a screen mesh with openings of 0.15 to 2 mm, for example. If the treatment solution 52 containing the pulp fibers is passed through a screen mesh with openings of 0.15 to 2 mm, the drainage containing the oxidative decomposition product of the superabsorbent polymers will pass through the screen. The pulp fibers, on the other hand, remain on the screen and are removed off as high-quality pulp fibers (recycled pulp fibers).

In the subsequent second drying step S38, the separated pulp fibers are dried with a high-temperature atmosphere or hot air. The drying temperature may be 105 to 210°C, for example, and is preferably 110 to 190°C. The drying time will differ depending on the drying temperature, but it may be 10 to 120 minutes, for example, and is preferably 15 to 100 minutes. This will allow the residual solvent on the surfaces of the pulp fibers to be vaporized and removed, so that highly pure pulp fibers with a very low superabsorbent polymers mixing ratio can be recovered. The structural members of the absorbent articles can therefore be efficiently recovered. The pulp fibers can also be sterilized (disinfected) by the high-temperature atmosphere or hot air.

The superabsorbent polymers may be recovered from the drainage containing the superabsorbent polymers and waste water separated by the third separating step S35. The recovering method is not particularly restricted and may be a method using a screen, for example, while the method of restoring the water-absorbing capacity of the recovered superabsorbent polymers may be a method of treatment with an aqueous alkali metal salt solution, for example. The residual drainage (with ozone dissolved in a trace amount of 10 ppm), which has been separated by the fourth separating step S37, may be circulated back to the pretreatment step S11. This allows the ozone-containing drainage to be used in a non-wasteful manner, and allows the pretreatment in the pretreatment step S11 and sterilization with the ozone to be carried out simultaneously.

The method of producing recycled fibers from a mixture of fibers and superabsorbent polymers may further include the fourth separating step S37 and second drying step S38 in addition to the oxidizing agent treatment step S36.

A preferred mode of this embodiment further includes, prior to the oxidizing agent treatment step S36 (continuous treatment step), an inactivating step S31 of treating the mixture using an aqueous solution capable of inactivating the water absorption performance of the superabsorbent polymers, to inactivate the water absorption performance of the superabsorbent polymers in the mixture, and, prior to the oxidizing agent treatment step S36 (continuous treatment step), a first separating step S32 of separating the pulp fibers containing the inactivated superabsorbent polymers from the aqueous solution. As a preferred mode of this method, therefore, the water absorption performance of the superabsorbent polymers is reduced by an aqueous solution capable of inactivating the water absorption performance of the superabsorbent polymer, in the inactivating step S31, and therefore the superabsorbent polymers can be more easily dissolved in a shorter period of time by the treatment solution 52 during the stage of the subsequent oxidizing agent treatment step S36 (continuous treatment step). That is, the superabsorbent polymers can be more reliably removed from the pulp fibers.

As a preferred mode of this embodiment, in the inactivating step S31, the aqueous solution capable of inactivating the water absorption performance of the superabsorbent polymer is an acidic aqueous solution, such as an acidic aqueous solution with pH ≤ 2.5. In the preferred mode of this method, therefore, since the aqueous solution capable of inactivating the water absorption performance of the superabsorbent polymers is an acidic aqueous solution, the superabsorbent polymers is more easily inactivated, and it is thus possible to more reliably reduce the water absorption performance of the superabsorbent polymers at the stage of the inactivating step S31. This allows the superabsorbent polymers to be more easily dissolved by the treatment solution in a shorter period of time, at the stage of the subsequent oxidizing agent treatment step S36 (continuous treatment step). In other words, the superabsorbent polymers can be more reliably removed from the fibers.

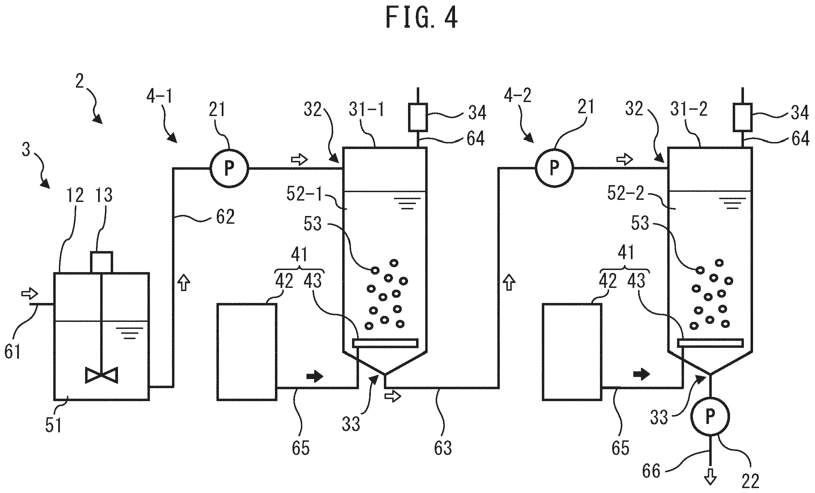

As another preferred embodiment, the treatment tank 31 may include at least a first treatment tank 31-1 and a second treatment tank 31-2 that are connected together in series. Fig. 4 is a schematic diagram showing an example of another construction of an apparatus 2 for the oxidizing agent treatment step of Fig. 1. The apparatus 2 of Fig. 4 differs from the apparatus 2 of Fig. 2 in that the two oxidizing agent treatment devices 4 are joined in series, or in other words, the first treatment tank 31-1 and the second treatment tank 31-2 are joined in series. For example, the liquid mixture 51 may be treated in multiple stages, in which the first treatment tank 31-1 is supplied with a liquid mixture 51 and discharges a first treated solution (the treatment solution 52-1 of the first treatment tank 31-1), and the second treatment tank 31-2 is supplied with the first treated solution and discharges a second treated solution (the treatment solution 52-2 of the second treatment tank 31-2). In this case, since treatment with fresh treatment solutions 52-1, 52-2 is carried out in the separate first and second treatment tanks 31-1, 31-2, the superabsorbent polymers that could not be dissolved in the first treatment tank (the first-stage treatment tank) 31-1 can easily dissolve in the second treatment tank (the second-stage treatment tank) 31-2, thereby allowing the superabsorbent polymers to more reliably dissolve and be separated from the fibers, compared to when only a single large-volume treatment tank 31 is provided.

As a preferred mode of this embodiment, the fibers are pulp fibers. Dissolution of the superabsorbent polymers present in the pulp fibers into the treatment solution 52 thus allows the superabsorbent polymers to be suitably removed from the pulp fibers. As a result, the purity of the regenerated pulp fibers, i.e. the recycled pulp fibers, can be further increased. This allows more easily reutilizable recycled pulp fibers to be produced. The superabsorbent polymers can thus be suitably removed from the pulp fibers while efficiently producing recycled pulp fibers. However, even when the fibers are fibers other than pulp fibers, it is still possible to increase the purity of the regenerated fibers, i.e. recycled fibers, and to easily produce reutilizable recycled fibers by applying the embodiments described above with reference to Fig. 1 to Fig. 4, in cases where superabsorbent polymers is adhering to the fibers. The superabsorbent polymers can thus be suitably removed from the fibers, while efficiently producing recycled fibers.

As a preferred mode of this embodiment, the material-separating step S1 may additionally have a pretreatment step S11 in which the used absorbent articles are in their original state without breakup and in a highly expanded state with water, without inactivation of the superabsorbent polymers. This can produce extremely high internal pressure in the used absorbent articles, so that some of the locations on the surfaces are in a state prone to rupture. Furthermore, by applying physical shock to the used absorbent articles that are in this state in the disintegration step S12, some of the locations on the surfaces can be torn, allowing the absorbent body materials inside them to effuse outward. This allows the used absorbent articles to disintegrate into at least the films (back sheets) and absorbent body materials. Since the films essentially maintain their original shapes during this time, they can be easily separated from the absorbent body materials in the subsequent separating step S13. This will allow the structural members such as films to be separated

**EP 3 626 883 A1**

from the other structural members while maintaining their shapes without breaking up. The structural members, such as films, of the absorbent articles can therefore be efficiently recovered.

As a preferred mode of this embodiment, a terpene is used to remove the adhesive, thereby allowing hot-melt adhesives bonding the structural members of the absorbent article to be dissolved at ordinary temperature. The absorbent articles can therefore be easily and cleanly dispersed, the pulp fibers and superabsorbent polymers can be separated from the absorbent articles, and the nonwoven fabrics and films can be separated while retaining the forms of each of the separate members. That is, it is possible to easily recover pulp fibers, films and nonwoven fabrics separately, without crushing the absorbent articles and without a complex separating step. When limonene is used as the terpene, a secondary effect of the limonene provides a refreshing, citrus-like odor and can therefore mask odors from excreta to some extent, reducing the burden of odors on operating personnel and the effect of odors on the surroundings. Since limonene is a monoterpene and has a structure similar to styrene, it can dissolve styrene-based hot-melt adhesives that are commonly used in absorbent articles. Since washing treatment of absorbent articles is possible at ordinary temperature, energy costs can be reduced and diffusion of odors can be minimized. Terpenes have a high washing effect for contaminating oils, and in addition to its dissolving effect for the hot-melt adhesive, it can also decompose and remove printing inks that may be present in printed matter on films, and therefore also allows recovery of printed films as highly pure plastic materials.

If an organic acid aqueous solution with a pH of no higher than 2.5 has been used for inactivation of the superabsorbent polymers, the pulp fibers are unlikely to suffer degradation. When citric acid is used as the organic acid, the chelating effect and washing power of the citric acid can potentially provide an effect of removing fouling components from excreta. A sterilizing effect and a deodorant effect against alkaline odors may also be expected.

Furthermore, by decomposing and removing the superabsorbent polymers with an oxidizing agent, it is possible to prevent contamination of the pulp fibers or drastic increase in waste water due to water absorption by the superabsorbent polymers. By adjusting the type and concentration of oxidizing agent used, it is possible to simultaneously carry out oxidative decomposition and sterilization of the superabsorbent polymers. When ozone is used as the oxidizing agent in the oxidizing agent treatment step, absolutely no chlorine-based agents are used and therefore high-quality RPF can be produced from the recovered plastic members while avoiding damage to the furnace. Since no salts are used during the treatment steps, there is no residue in the pulp fibers and high quality pulp with a low ash content can be recovered.

This embodiment has been described assuming a film as the structural member of the back sheet and a nonwoven fabric as the structural member of the top sheet. However, embodiments wherein a nonwoven fabric is the structural member of the back sheet and a film is the structural member of the top sheet, or wherein films are the structural members of both the back sheet and the top sheet, may also be carried out by the same method as the embodiment described above, and can exhibit the same function and effect.

The absorbent article of the present invention is not restricted to the embodiments described above and can incorporate appropriate combinations and modifications without departing from a scope of the object and subject matter of the present invention.

REFERENCE SIGNS LIST

31    Treatment tank

51    Liquid mixture

52    Treatment solution

S36   Oxidizing agent treatment step

**Claims**

1.   A method of producing recycled fibers from a mixture of fibers and superabsorbent polymers, the method comprising:
a continuous treatment step of continuously supplying a liquid mixture including fibers containing the superabsorbent polymers and water at a first flow rate into a treatment tank holding a treatment solution capable of dissolving the superabsorbent polymers, while continuously discharging the treatment solution containing the fibers from which the superabsorbent polymers has been dissolved and removed at a second flow rate out of the treatment tank.

**2.** The method according to claim 1, wherein
the continuous treatment step includes a step of continuously supplying the liquid mixture through a top of the treatment tank while continuously discharging the treatment solution through a bottom of the treatment tank.

**3.** The method according to claim 2, wherein

the treatment solution capable of dissolving the superabsorbent polymers is an aqueous solution containing a gaseous substance that decomposes the superabsorbent polymers in a soluble manner, and
the continuous treatment step further includes a delivery step of continuously delivering bubbles of the gaseous substance from a bottom toward a top of the treatment solution.

**4.** The method according to claim 3, wherein
the delivery step includes a step of delivering the gaseous substance in a microbubble or nanobubble state.

**5.** The method according to claim 3 or 4, wherein
the gaseous substance includes ozone.

**6.** The method according to any one of claims 1 to 5, wherein
the fibers are pulp fibers.

**7.** The method according to any one of claims 1 to 6, wherein
the treatment solution is an acidic aqueous solution.

**8.** The method according to any one of claims 1 to 7, further comprises:

an inactivating step of treating the mixture using an aqueous solution capable of inactivating a water absorption performance of superabsorbent polymers, to inactivate the water absorption performance of the superabsorbent polymers in the mixture, prior to the continuous treatment step, and
a separating step of separating the fibers including the inactivated superabsorbent polymers from the aqueous solution, prior to the continuous treatment step.

**9.** The method according to claim 8, wherein
the aqueous solution capable of inactivating the water absorption performance of the superabsorbent polymers in the inactivating step is an acidic aqueous solution.

**10.** The method according to any one of claims 1 to 9, wherein
the treatment tank includes at least a first treatment tank and a second treatment tank that are connected together in series.

# FIG. 1

```
        METHOD OF
   SEPARATING MATERIALS
            |
      PRETREATMENT        ~~~ S11
         STEP
            |
      DISINTEGRATION      ~~~ S12
         STEP
            |
   ┌ ─ ─ ─ ─ ─ ─ ─ ─ ─ ─ ─ ─ ─ ─ ─ ─ ─ ─ ─ ─ ┐
   │ S31 ~~~  INACTIVATING      SEPARATING  ┊ ─ ─ ─ S13
   │             STEP              STEP      │
   │                |                        │
   │ S32 ~~~  FIRST SEPARATING               │
   │             STEP                        │
   │                |                        │
   │ S33 ~~~                                 │
   │   SECOND SEPARATING    THIRD SEPARATING ~~~ S35
   │       STEP                 STEP         │
   │          |                   |          │
   │   FIRST DRYING STEP    OXIDIZING AGENT  ~~~ S36
   │                        TREATMENT STEP   │
   │   S34                        |          │
   │                        FOURTH SEPARATING ~~~ S37
   │                            STEP         │
   │                              |          │
   │                        SECOND DRYING    ~~~ S38
   │                            STEP         │
   └ ─ ─ ─ ─ ─ ─ ─ ─ ─ ─ ─ ─ ─ ─ ─ ─ ─ ─ ─ ─ ┘
   NONWOVEN    FILMS      PULP FIBERS      SAP
   FABRICS
```

# FIG. 2

# FIG. 3

# FIG. 4

EP 3 626 883 A1

**INTERNATIONAL SEARCH REPORT**

| International application No. |
| --- |
| PCT/JP2018/018180 |

A.  CLASSIFICATION OF SUBJECT MATTER
Int.Cl.  D21C5/02(2006.01)i,   B09B3/00(2006.01)i,   B09B5/00(2006.01)i,
        C08J11/10(2006.01)i, D21B1/32(2006.01)i, D21H11/14(2006.01)i

According to International Patent Classification (IPC) or to both national classification and IPC

B.  FIELDS SEARCHED

Minimum documentation searched (classification system followed by classification symbols)
Int.Cl.  A61F13/15-13/84,  A61L15/16-15/64,  B09B1/00-5/00,  B09C1/00-1/10,
        B29B17/00-17/04,  C08J11/00-11/28,  D21B1/00-1/38,  D21C1/00-11/14,
        D21D1/00-99/00,  D21F1/00-13/12,  D21G1/00-9/00,  D21H11/00-27/42,
        D21J1/00-7/00

Documentation searched other than minimum documentation to the extent that such documents are included in the fields searched
    Published examined utility model applications of Japan     1922-1996
    Published unexamined utility model applications of Japan   1971-2018
    Registered utility model specifications of Japan           1996-2018
    Published registered utility model applications of Japan   1994-2018

Electronic data base consulted during the international search (name of data base and, where practicable, search terms used)
    JSTPlus/JMEDPlus/JST7580 (JDreamIII)

C.  DOCUMENTS CONSIDERED TO BE RELEVANT

| Category* | Citation of document, with indication, where appropriate, of the relevant passages | Relevant to claim No. |
| --- | --- | --- |
| A | JP 2009-183893 A (SAMUZU KK) 20 August 2009 (Family: none) | 1-10 |
| A | JP 06-269746 A (WATSON, Dana, L.) 27 September 1994 & JP 8-509782 A & JP 11-514281 A & US 5567245 A & US 6238516 B1 & WO 1994/020668 A1 & WO 1996/027045 A1 | 1-10 |
| A | JP 2009-113038 A (MATSUMOTO NURSE SANGYO KK) 28 May 2009 (Family: none) | 1-10 |
| A | JP 2003-135521 A (FUKUOKA INDUSTRY, SCIENCE & TECHNOLOGY FOUNDATION) 13 May 2003 (Family: none) | 1-10 |
| A | WO 1992/007995 A1 (TRYAM TRADING INC.) 14 May 1992 & US 5558745 A & EP 748836 A1 & KR 10-0199659 B | 1-10 |

☐  Further documents are listed in the continuation of Box C.      ☐  See patent family annex.

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| 03 August 2018 (03.08.2018) | 14 August 2018 (14.08.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016000881 A